# EUROPEAN PATENT SPECIFICATION

(11) **EP 0 228 984 B1**
(45) Date of publication and mention of the grant of the patent: **17.03.1993**
(21) Application number: 86630187.2
(22) Date of filing: 11.12.1986
(51) Int. Cl.: H02G 13/00

(54) **Lightning conductor**
Blitzableiter
Paratonnerre

(30) Priority: 19.12.1985 AU 3982/85; 15.08.1986 AU 7528/85
(43) Date of publication of application: 15.07.1987
(73) Proprietor: Gumley, John Richard, Bellerive Tasmania 7018 (AU)
(72) Inventor: Gumley, John Richard, Bellerive Tasmania 7018 (AU)
(74) Representative: Waxweiler, Jean

(56) References cited:
- EP-A- 0 096 655
- AU-B- 564 606
- FR-A- 1 203 579
- FR-A- 1 478 526
- GB-A- 2 146 851

## Description

This invention relates to improvements in lightning conductors.

It is generally agreed that Benjamin Franklin invented the conventional lightning conductor. Prior to 1752 he and three friends showed, through experiments, that electricity was attracted to sharpened pieces of metal. In 1753 Franklin wrote a detailed description of a lightning conductor. Since that time conductors in the nature of sharp pointed rods, located on the top of structures, to capture lightning discharges, have been commonly known as Franklin Rods.

Since Franklin first described his concept of lightning protection, there have been a number of perceived improvements to Franklin Rods. They may be summarised as follows:-
1. Multiple points fanning out from a single rod.
2. Radioactive emissions to enhance air conductivity around the point.
3. A solar or battery powered spark generator to create ionization.
4. Spark generators which derive energy from the natural electric field which exists during a thunderstorm and preceding a lightning stroke.

FR-A-1 478 526 is an example of a radioactive lightning conductor (type 2 listed above). An earthed point is surrounded by a plurality of points connected to an electrode fitted with radioactive sources. The electrode is insulated from the earthed point.

In US-A-4,540844, there is described a single-point Franklin Rod which is brought to a high tension potential by a generator to produce and maintain at its maximum a corona discharge. The ions generated by the corona discharge form a column of ionized air above the point of the rod, to facilitate the occurrence of lightning by increasing the conductivity of the atmospheric air.

US-A-4,518,816 discloses a lightning conductor which uses a piezoelectric device to create a corona effect and atmospheric ionization.

EP-A-0 096 655 discloses a lightning rod having a point designed to receive lightning strokes. The rod is connected to an earth lead, and held in a coaxial insulator.

A metal element is attached to the insulator. The element has a first arm extending radially at the end of which is provided three spikes, and a second arm, the free end of which is pointed and positioned near the point of the lightning rod.

EP-A-0 096 655 states that in stormy weather, the potential in the atmosphere increases from the ground. The first arm of the metal element acts to bring the arm to the same potential as the surrounding atmosphere. The voltage across the gap between the free end of the second arm and the point of the rod increases to a level where an electrical discharge occurs across the gap. The discharge creates a leader in the atmosphere above the point of the lightning rod, to provide a conductive channel which lightning will preferably follow.

In GB-A-2146851A, there is disclosed a single-point rod connected to an accelerator consisting of radially arranged metal deflector plates and needles on a dielectric plate in register with apertures in the metal plate. The rod and plates are positively charged and the needles are negatively charged, the resulting electric field creating ionization.

It is felt that despite the apparent logic of the prior art ionizing rods, a more effective arrangement is needed, one which would respond dynamically to the appearance of a lightning down leader.

It is accordingly an object of this invention to provide an improved lightning conductor.

The invention provides a passive device (10) for attracting lightning, said device (10) including an earth element (12) and an electrically conductive element (14) insulated from said earth element (12), characterized in that said electrically conductive element (14) consists of at least one surface element (14), in that a high impedance drain (20) is connected between said or each surface element (14) and said earth element (12), and in that there is an air gap (18) between said or each surface element (14) and said earth element (12), said device (10) being adapted to operate such that under particular atmospheric conditions, when the approach of a lightning down leader creates an electric field in the vicinity of the device (10), said device (10) responds to said down leader, in that arcing takes place between said surface element (14) or one of said surface elements (14) and said earth element (12), said arcing leading to plasma creation and upward leader formation.

The invention also provides a passive lightning attracting device (10), including an earth element (12) and an electrically conductive element (14) insulated from said earth element (12), characterized in that said electrically conductive element (14) consists of at least one surface element (14), and in that there is a high impedance drain (20) connected between said surface element (14) and said earth element (12), said electrically conductive surface element (14) being insulated from said earth element (12), and in that one discontinuity in said surface element (14) defines one boundary of an air gap (18) which is in the vicinity of a portion of said earth element (12), wherein under particular conditions, when the approach of a lightning down leader creates an electric field in the vicinity of the device (10), said device (10) responds to said leader, in that arcing occurs between said surface element (14) and said earth element (12), said arcing leading to plasma creation and upward leader formation.

The invention further provides a passive lightning conductor (10), characterized by a generally spherical, electrically conductive surface element (14), by an earth rod (12) from which said surface element (14) is insulated (16) and by a high impedance drain (20) connected between said surface element (14) and said earth rod (12) said surface element (14) having an aperture (17) therein defining an air gap (18) between said surface element (14) and said earth rod (12) such that in certain atmospheric conditions associated with the occurrence of lightning, when the approach of a lightning down leader creates an electric field in the vicinity of the lightning conductor (10), said lightning conductor (10) responds to said down leader, in that arcing between said surface element (14) across said air gap (18) to said earth rod (12) will occur, said arcing leading to plasma creation in the vicinity of said earth rod (12) and to upward leader formation.

The invention also provides a passive lightning attracting device (10) characterized by a plurality of electrically conductive surface elements (14), each of which is insulated (16) from an earth element (12) and spaced from the other of electrically conductive surface elements (14), and by a high impedance drain (20) connected between each of said surface elements (14) and said earth element (12), there being an air gap (18) between each said surface element (14) and at least a portion of said earth element (12) so that when the approach of a lightning down leader creates an electric field in the vicinity of the device (10), said device (10) responds to said leader; each air gap (12) allowing arcing between any surface element (14) and said earth element (12), the arcing causing plasma creation, resulting in upward leader formation.

Preferred embodiments of the invention will be described in detail hereinafter in relation to the accompanying drawings, in which:-
Figure 1 is a vertical section through a first embodiment of the invention;
Figure 2 is a vertical sect ion through a second embodiment of the invention;
Figure 3 is a representation of the electric field about the embodiment of Figure 1 under static conditions;
Figure 4 is a diagrammatic section through a lightning conductor of the type shown in Figure 1;
Figure 5 is a representation of the strong electric field about the embodiment of Figure 1 as a lightning down leader approaches;
Figure 6 is a representation similar to that of Figure 5 showing the field about a Franklin Rod in similar circumstances;
Figure 7 is a vertical section through a third embodiment of the invention; and
Figure 8 is a vertical section through a fourth embodiment of the invention.

Before commencing a detailed description of the embodiments of this invention, reference should again be made to US-A-4,518,816 in particular column 1, lines 14 to 26 thereof. In that section of the patent specification, mention is made of a downward precursor, (or down leader) which consists of charged particles, being directed towards the ground. It is stated that the approach of this down leader creates an intense electric field near the ground, and this in turn creates upward discharges or upward tracers or leaders. The first upward tracer which meets a down leader will close the 'circuit' and cause the lightning discharge. Thus, it can be of great benefit to be able to close the circuit and attract the lightning discharge to a preferred location.

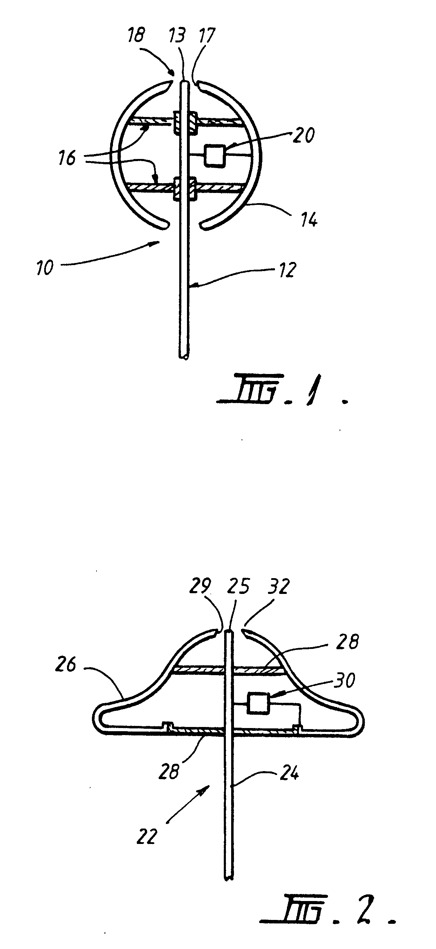

Figure 1 shows one embodiment 10 of the lightning attracting device of this invention. The device 10 includes an earth rod 12, having a tip 13, to which rod a substantially spherical conductive element 14 is attached by insulated supports 16. There is a circular aperture 17 at the top of the spherical element, in a 'North Pole' location. An air gap 18 is created between the edge of aperture 17 and the tip 13 of earth rod 12. A high impedance static drain 20 is connected between element 14 and rod 12. Although the tip 13 of earth rod 12 is shown as being located on the continuation of the surface of the spherical element 14, it may extend beyond such a position, or be otherwise located such as to be in the vicinity of aperture 17.

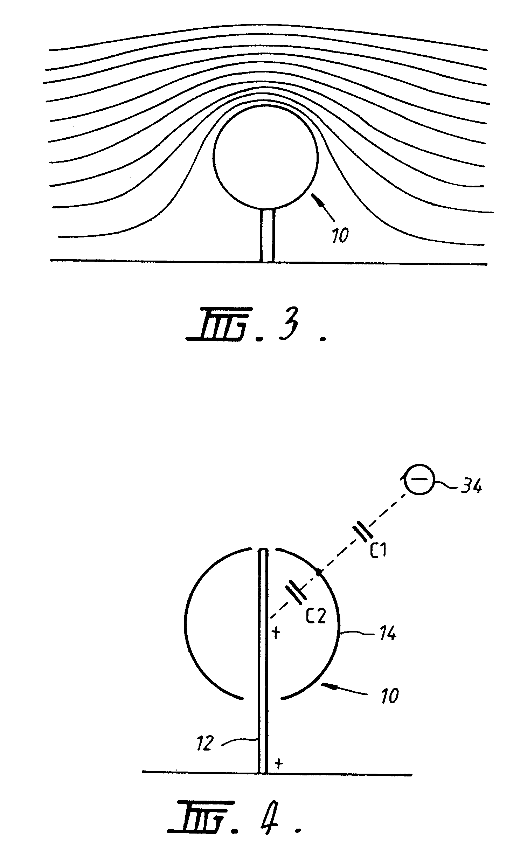

In Figure 2, the embodiment 22 of the lightning attracting device also includes an earthed rod 24, to which a rounded conductive element 26 is connected to earthed rod 24 by insulated supports 28. The element 26 has a complex curved surface which is rather like a radially dished hemisphere with curved edges. Device 22 also has a generally circular aperture 29, there being an air gap 32 between the edges of aperture 29 and the tip 25 of rod 24. There is a high impedance static drain 30 connected between element 26 and rod 24.

The obvious visual difference between the described embodiments of this invention and the prior art Franklin Rods is that there is here presented a smoothly rounded surface rather than single or multiple points. However, it is possible for the tips 13,25 of rods 12,24 to be sharp, flat, dished, hemispherical, convex, concave or any other shape.

In addition, the system is normally static and is designed to eliminate the corona emissions which occur under the strong electric fields referred to in the introduction, which of course is contrary to the thrust of the described prior art.

Recent studies of conventional lightning protection systems have showed that sharp points, with or without ion creating additions, can cause a corona which forms into a space charge immediately above the point. This space charge has a polarity which acts to reduce the electric field at the point.

Laboratory and field studies show that the strength of the electric field is a critical parameter in forming conditions suitable for upward steamer generation. Streamers, which develop into upward leaders or tracers, are essential to intercepting the downward leader and completing the electric channel between cloud and ground.

As stated, space charges can weaken electric fields about exposed points. They may exist with variable magnitude and, can be strongly dependent on factors such as wind velocity. The existence of space charges is the suggested reason for the frequently reported occurrence of lightning missing a Franklin Rod.

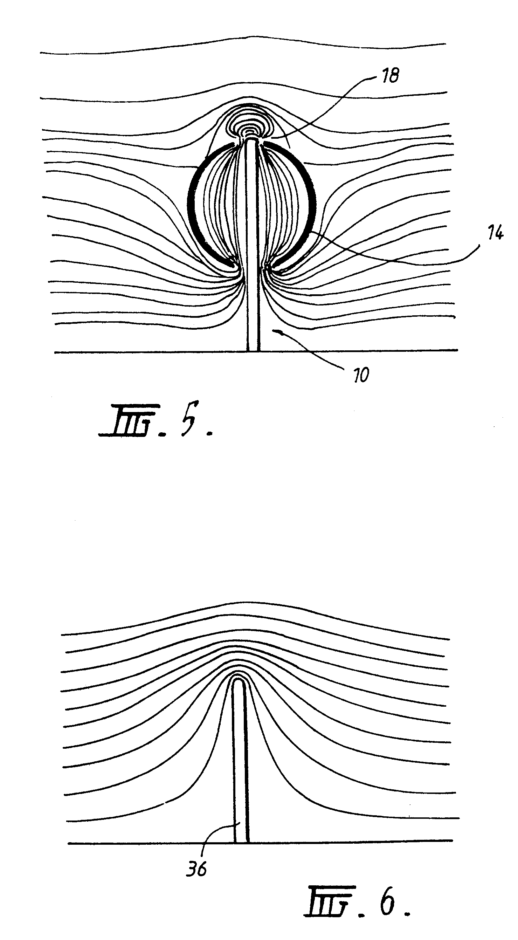

With the present invention, without the presence of lightning-producing circumstances, the device is static. As stated, the surface 14 or 26 is insulated from its support rod 12 or 24 but connected to it by a high impedance network 20 or 30. Under normal static electric field conditions, both surface and rod are effectively grounded. The shape of the whole assembly precludes the generation of corona discharges which can lead to formation of a space charge. Figure 3 shows the electric field about the spherical sphere of Figure 1 under static field conditions.

On the approach of a lightning down leader, however, the device accordingly responds dynamically by causing electric field intensification and generating electric arcing to form plasma at the top of the conductive surface element. The plasma and the associated electric field effect will create ideal conditions for establishment of a streamer, which then converts to an upward leader which intercepts the down leader. This invention has the ability to launch streamers before other nearby objects and thus, has the desirable ability to attract lightning.

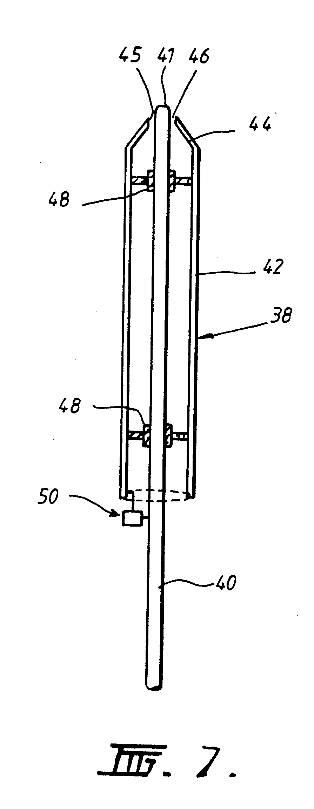

Figure 4 shows diagrammatically the two effective capacitors C1 and C2 which exist, between the surface 14 and the rod 12, and between the surface 14 and the down leader 34, when the down leader approaches, conveying a charge of, typically, 0.5 to 20 coulombs at 10⁵ ms⁻¹.

Since a high impedance 20 exists between rod 12 and surface element 14, the element will rise in voltage. The high impedance static drain 20 restricts fast moving discharge currents.

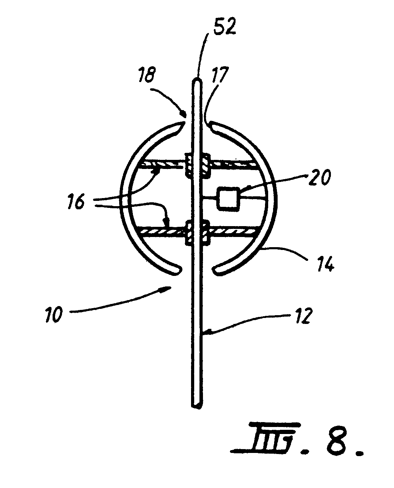

The small air gap 18 exists between the top of the earthed support rod 12 and the surrounding surface element 14. When this outer insulated section rises in voltage, an electric field forms at the air gap. The geometry of the system creates a pinching effect (see Figure 5) and produces a strong electric field immediately above the earthed support rod. This can be more intense than that around a conventional Franklin rod 36, which is illustrated in Figure 6.

If the leader 34 approaches sufficiently close and has adequate charge, arcing will occur. The formation of electrical plasma can trigger an upward streamer which now has a greater chance to propagate due to the absence of an intervening overhead space charge.

It can be seen that the lightning attracting device of this invention is very likely to create the first streamer, upward leader or tracer, and thus lightning may be directed in a relatively control led manner to the device, rather than to structures which are to be protected.

It is clear that the conductive surface may take many different shapes such as ellipsoidal, inverted saucer-shaped or other shapes may be used, if for no other reason than to improve capacitance to the leader channel. It may also be found desirable to actually provide a fixed capacitor between the conductive surface element and the earthed rod, to change spark repetitive rate and the energy contained in each spark.

It may also be possible to segment the sphere rather, like the slices of an orange. Each segment may be insulated from the earthed rod and from adjacent segments. In this case each segment may be provided with an air gap of different dimension. This procedure would allow arcing to occur as a ripple effect around the rod. Thus, arcing will tend to be continuous during leader approach.

In the conductor 38 of Figure 7, there is a support (earth) rod 40 and a generally cylindrical conductive surface 42. The surface contains a frusto-conical top portion 44, there being an air gap 46 between the edges of aperture 45 at the top of portion 44 and the tip 41 of rod 40. Insulated supports 48 are provided to insulate surface 42 from rod 40.

A static drain arrangement 50 is provided, similar to the high impedance static drain 30 of Figure 2 of the aforementioned application. The arrangement 50 may alternatively be physically located within the cylinder 42.

Figure 8 illustrates an embodiment substantially identified to that of Figure 1, and all the reference numerals of Figure 1 except 13 indicate the same features in Figure 8.

In Figure 8, tip 52 of earthed rod 12 is located externally of the spherical surface element 14, to the extent of being located about the intersection of the spherical surface 14 and rod 12 a distance equal to 25% of the diameter of the sphere. The tip, as indicated hereinbefore, may be located at any position between that shown in Figure 1 and that shown in Figure 8. It should also be noted that tip 52 has a hemispherical convex profile.

## Claims

1. A passive device (10) for attracting lightning, said device (10) including an earth element (12) and an electrically conductive element (14) insulated from said earth element (12), characterized in that said electrically conductive element (14) consists of at least one surface element (14), in that a high impedance drain (20) is connected between said or each surface element (14) and said earth element (12), and in that there is an air gap (18) between said or each surface element (14) and said earth element (12), said device (10) being adapted to operate such that under particular atmospheric conditions, when the approach of a lightning down leader creates an electric field in the vicinity of the device (10), said device (10) responds to said down leader, in that arcing takes place between said surface element (14) or one of said surface elements (14) and said earth element (12), said arcing leading to plasma creation and upward leader formation.

2. A passive device (10) for attracting lightning, characterized in that said or each surface has a discontinuity therein defining one boundary of said air gap (18).

3. A device (10) according to claim 1 or claim 2, characterized in that said surface element (14) is substantially spherical.

4. A device (10) according to claim 1 or claim 2, characterized in that said surface element (14) is substantially cylindrical.

5. A passive lightning attracting device (10), including an earth element (12) and an electrically conductive element (14) insulated from said earth element (12), characterized in that said electrically conductive element (14) consists of at least one surface element (14), and in that there is a high impedance drain (20) connected between said surface element (14) and said earth element (12), said electrically conductive surface element (14) being insulated from said earth element (12), and in that one discontinuity in said surface element (14) defines one boundary of an air gap (18) which is in the vicinity of a portion of said earth element (12), wherein under particular conditions, when the approach of a lightning down leader creates an electric field in the vicinity of the device (10), said device (10) responds to said leader, in that arcing occurs between said surface element (14) and said earth element (12), said arcing leading to plasma creation and upward leader formation.

6. A device (10) according to claim 5, characterized in that said surface element (14) is substantially spherical.

7. A device (10) according to claim 5, characterized in that said surface element (14) is substantially cylindrical.

8. A device (10) according to claim 6 or claim 7, characterized in that said each element (12) is a rod terminating in a free end which constitutes said portion of said earth element (12), and said free end is located at a distance from said discontinuity equivalent to 25% of the diameter of said surface element.

9. A device (10) according to claim 5, characterized in that said surface element is a radially dished hemisphere with curved edges (14).

10. A passive lightning conductor (10), characterized by a generally spherical, electrically conductive surface element (14), by an earth rod (12) from which said surface element (14) is insulated (16) and by a high impedance drain (20) connected between said surface element (14) and said earth rod (12) said surface element (14) having an aperture (17) therein defining an air gap (18) between said surface element (14) and said earth rod (12) such that in certain atmospheric conditions associated with the occurrence of lightning, when the approach of a lightning down leader creates an electric field in the vicinity of the lightning conductor (10), said lightning conductor (10) responds to said down leader, in that arcing between said surface element (14) across said air gap (18) to said earth rod (12) will occur, said arcing leading to plasma creation in the vicinity of said earth rod (12) and to upward leader formation.

11. A lightning conductor according to claim 10, characterized in that said electrically conductive surface element (14) is supported from said earth rod (12) by insulating supports (16).

12. A passive lightning attracting device (10) characterized by a plurality of electrically conductive surface elements (14), each of which is insulated (16) from an earth element (12) and spaced from the other of electrically conductive surface elements (14), and by a high impedance drain (20) connected between each of said surface elements (14) and said earth element (12), there being an air gap (18) between each said surface element (14) and at least a portion of said earth element (12) so that when the approach of a lightning down leader creates an electric field in the vicinity of the device (10), said device (10) responds to said leader; each air gap (12) allowing arcing between any surface element (14) and said earth element (12), the arcing causing plasma creation, resulting in upward leader formation.

## Patentansprüche

1. Passive Vorrichtung (10) zum Anziehen eines Blitzes, wobei die Vorrichtung (10) ein Erdelement (12) und ein elektrisch leitfähiges Element (14), das von dem Erdelement (12) isoliert ist, aufweist, dadurch gekennzeichnet, daß das elektrisch leitfähige Element (14) aus wenigstens einem Oberflächenelement (14) besteht, daß eine Senke (20) hoher Impedanz zwischen das oder jedes Oberflächenelement (14) und das Erdelement geschaltet ist und daß ein Luftspalt (18) zwischen dem oder jedem Oberflächenelement (14) und dem Erdelement (12) vorhanden ist, wobei die Vorrichtung (10) in der Lage ist, so zu arbeiten, daß unter besonderen atmosphärischen Bedingungen, wenn die Ausbildung einer Blitzherabführung ein elektrisches Feld in der Nahe der Vorrichtung (10) erzeugt, die Vorrichtung (10) auf die Herabführung anspricht, indem eine Lichtbogenbildung zwischen dem Oberflächenelement (14) oder einem der Oberflächenelemente (14) und dem Erdelement (12) stattfindet, wobei die Lichtbogenbildung zur Plasmaerzeugung und zur Hinaufführungsbildung führt.

2. Passive Vorrichtung (10) zum Anziehen von Blitzen nach Anspruch 1, dadurch gekennzeichnet, daß die oder jede Oberfläche eine Diskontinuität aufweist, welche eine Begrenzung des Luftspalts (18) bildet.

3. Vorrichtung (10) nach Anspruch 1 oder Anspruch 2, dadurch gekennzeichnet, daß das Oberflächenelement (14) im wesentlichen sphärisch ist.

4. Vorrichtung (10) nach Anspruch 1 oder Anspruch 2, dadurch gekennzeichnet, daß das Oberflächenelement (14) im wesentlichen zylindrisch ist.

5. Passive Blitzanziehvorrichtung (10) mit einem Erdelement (12) und einem elektrisch leitfähigen Element (14), das von dem Erdelement (12) isoliert ist, dadurch gekennzeichnet, daß das elektrisch leitfähige Elemnt (14) aus wenigstens einem Oberflächenelement (14) besteht und daµ eine Senke (20) hoher Impedanz vorgesehen ist, die zwischen das Oberflächenelement (14) und das Erdelement (12) geschaltet ist, wobei das elektrisch Ieitfähige Oberflächenelement (14) von dem Erdelement (12) isoliert ist, und daß eine Diskontinuität in dem Oberflächenelement (14) eine Begrenzung eines Luftspalts (18) bildet, der sich in der Nahe eines Teils des Erdelements (12) befindet, wobei unter besonderen Bedingungen, wenn das Vorsehen einer Blitzherabführung ein elektrisches Feld in der Nähe der Vorrichtung (10) erzeugt, die Vorrichtung (10) auf die Führung so anspricht, daß die Lichtbogenbildung zwischen dem Oberflächenelement (14) und dem Erdelement (12) erfolgt, wobei die Lichtbogenbildung zur Plasmaerzeugung und zur Hinaufführungsbildung führt.

6. Vorrichtung (10) nach Anspruch 5, dadurch gekennzeichnet, daß das Oberflächenelement (14) im wesentlichen sphärisch ist.

7. Vorrichtung (10) nach Anspruch 5, dadurch gekennzeichnet, daß das Oberflächenelement (14) im wesentlichen zylindrisch ist.

8. Vorrichtung (10) nach Anspruch 6 oder Anspruch 7, dadurch gekennzeichnet, daß jedes Element (12) eine Stange ist, die in einem freien Ende endigt, welches diesen Teil des Erdelements (12) bildet und in einer Entfernung von der Diskontinuität angeordnet ist, die 25% des Durchmessers des Oberflächenelements äquivalent ist.

9. Vorrichtung (10) nach Anspruch 5, dadurch gekennzeichnet, daß das Oberflächenelement eine radial vertiefte Halbkugel mit gekrümmten Rändern (14) ist.

10. Passiver Blitzableiter (10), gekennzeichnet durch ein insgesamt sphärisches, elektrisch leitfähiges Oberflächenelement (14), durch eine Erdstange (12), von der das Oberflächenelement (14) isoliert (16) ist, und durch eine Senke (20) hoher Impedanz, die zwischen das Oberflächenelement (14) und die Erdstange (12) geschaltet ist, wobei das Oberflächenelement (14) eine Öffnung (17) hat, die einen Luftspalt (18) zwischen dem Oberfächenelement (14) und der Erdstange (12) festlegt, so daß bei gewissen atmosphärischen Bedingungen, die mit dem Auftreten eines Blitzes verbunden sind, wenn die Ausbildung einer Blitzherabführung ein elektrisches Feld in der Nähe des Blitzableiters (10) erzeugt, der Blitzableiter (10) auf die Herabführung anspricht, so daß die Lichtbogenbildung zwischen dem Oberflächenelement (14) über den Luftspalt (18) zu der Erdstange (12) erfolgen wird, wobei die Lichtbogenbildung zur Plasmaerzeugung in der Nähe der Erdstange (12) und zur Hinaufführungsbildung führt.

11. Blitzableiter nach Anspruch 10, dadurch gekennzeichnet, daß das elektrisch leitfähige Oberflächenelement (14) an der Erdstange (12) durch isolierende Halter (16) abgestützt ist.

12. Passive Blitzanziehvorrichtung (10), gekennzeichnet durch mehrere elektrisch leitfähige Oberflächenelemente (14), von denen jedes von einem Erdelement (12) isoliert (16) und Abstand von dem anderen der elektrisch leitfähigen Oberflächenelemente (14) hat, und durch eine Senke (20) mit hoher Impedanz, die zwischen jedes der Oberflächenelemente (14) und das Erdelement (12) geschaltet ist, wobei ein Luftspalt (18) zwischen jeweils dem Oberflächenelement (14) und wenigstens einem Teil des Erdelements (12) angeordnet ist, so daß, wenn die Ausbildung einer Blitzherabführungsstange ein elektrisches Feld in der Nähe der Vorrichtung (10) erzeugt, die Vorrichtung (10) auf die Führung anspricht; wobei jeder Luftspalt (12) eine Lichtbogenbildung zwischen irgendeinem Oberflächenelement (14) und dem Erdelement (12) gestattet und die Lichtbogenbildung eine Plasmaerzeugung hervorruft, die zur Hinaufführungsbildung führt.

## Revendications

1. Dispositif passif (10) pour attirer la foudre, ce dispositif (10) comportant un élément (12) mis à la terre et un élément (14) conducteur de l'électricité, isolé par rapport à l'élément (12) mis à la terre, caractérisé en ce que l'élément (14) conducteur de l'électricité est constitué par au moins un élément de surface (14), en ce qu'un drain (20) à haute impédance est connecté entre l'élément de surface (14) ou chaque élément de surface et l'élément (12) mis à la terre, et en ce qu'il existe un intervalle d'air (18) entre l'élément de surface (14) ou chaque élément de surface et l'élément (12) mis à la terre, le dispositif (10) étant adapté de manière à fonctionner de telle façon que dans des conditions atmosphériques particulières, lorsque l'approche d'un précurseur descendant de la foudre crée un champ électrique au voisinage du dispositif (10), ce dispositif (10) répond à ce précurseur descendant et la création d'un arc a lieu entre l'élément de surface (14) ou l'un des éléments de surface (14) et l'élément (12) mis à la terre, la création de cet arc conduisant à la production d'un plasma et à la formation d'un précurseur ascendant.

2. Dispositif (10) suivant la revendication 1 caractérisé en ce que l'élément de surface ou chaque élément de surface présente une discontinuité définissant une limite de l'intervalle d'air (18).

3. Dispositif (10) suivant l'une quelconque des revendications 1 ou 2 caractérisé en ce que l'élément de surface (14) est sensiblement sphérique.

4. Dispositif (10) suivant l'une quelconque des revendications 1 ou 2 caractérisé en ce que l'élément de surface (14) est sensiblement cylindrique.

5. Dispositif passif (10) pour attirer la foudre comportant un élément (12) mis à la terre et un élément (14) conducteur de l'électricité, isolé par rapport à l'élément (12) mis à la terre, caractérisé en ce que l'élément (14) conducteur de l'électricité est constitué par au moins un élément de surface (14) et en ce qu'un drain (20) à haute impédance est connecté entre l'élément de surface (14) et l'élément (12) mis à la terre, l'élément de surface (14) conducteur de l'électricité étant isolé par rapport à l'élément (12) mis à la terre, et en ce qu'une discontinuité dans l'élément de surface (14) définit une limite d'un intervalle d'air (18) qui est au voisinage d'une partie de l'élément (12) mis à la terre si bien que dans des conditions particulières, lorsque l'approche d'un précurseur descendant de la foudre crée un champ électrique au voisinage du dispositif (10), ce dispositif (10) répond à ce précurseur descendant et la création d'un arc a lieu entre l'élément de surface (14) et l'élément (12) mis à la terre, la création de cet arc conduisant à la production d'un plasma et à la formation d'un précurseur ascendant.

6. Dispositif (10) suivant la revendication 5 caractérisé en ce que l'élément de surface (14) est sensiblement sphérique.

7. Dispositif (10) suivant la revendication 5 caractérisé en ce que l'élément de surface (14) est sensiblement cylindrique.

8. Dispositif (10) suivant l'une quelconque des revendications 6 ou 7 caractérisé en ce que chaque élément (12) est une tige se terminant par une extrémité libre qui constitue ladite partie de l'élément (12) mis à la terre, et cette extrémité libre est située à une distance de la discontinuité égale à 25% du diamètre de l'élément de surface.

9. Dispositif (10) suivant la revendication 5 caractérisé en ce que l'élément de surface est un hémisphère radialement en forme d'assiette, à bords courbes (14).

10. Parafoudre passif (10) caractérisé en ce qu'il comprend un élément de surface (14), conducteur de l'électricité, de forme générale sphérique, une tige (12) mise à la terre et par rapport à laquelle l'élément de surface (14) est isolé, et un drain (20) à haute impédance connecté entre l'élément de surface (14) et la tige (12) mise à la terre, cet élément de surface (14) présentant une ouverture (17) définissant un intervalle d'air (18) entre l'élément de surface (14) et la tige (12) mise à la terre, de telle façon que, dans certaines conditions atmosphériques liées à l'apparition de la foudre, lorsque l'approche d'un précurseur descendant de la foudre crée un champ électrique au voisinage du paratonnerre (10), ce paratonnerre (10) répond à ce précurseur descendant et un arc est créé entre l'élément de surface (14), en travers de l'intervalle d'air (18), et la tige (12) mise à la terre, cet arc conduisant à la création d'un plasma au voisinage de la tige (12) mise à la terre et à la formation d'un précurseur ascendant.

11. Parafoudre suivant la revendication 10 caractérisé en ce que l'élément de surface (14) conducteur de l'électricité est supporté, à partir de la tige (12) mise à la terre, par l'intermédiaire de supports isolants (16).

12. Dispositif passif (10) attirant la foudre caractérisé en ce qu'il comprend une pluralité d'éléments de surface (14) conducteurs de l'électricité, dont chacun est isolé (16) par rapport à un élément (12) mis à la terre et est espacé des autres éléments de surface (14) conducteurs de l'électricité, et un drain (20) à haute impédance connecté entre chaque élément de surface (14) et l'élément (12) mis à la terre, avec un intervalle d'air (18) entre chaque élément de surface (14) et au moins une partie de l'élément (12) mis à la terre, si bien que, lorsque l'approche d'un précurseur descendant de la foudre crée un champ électrique au voisinage du dispositif (10), ce dispositif (10) répond à ce précurseur descendant, chaque intervalle d'air (18) autorisant la création d'un arc entre un élément de surface (14) quelconque et l'élément (12) mis à la terre, la création de cet arc conduisant à la production d'un plasma se traduisant par la formation d'un précurseur ascendant.
